# EUROPEAN PATENT APPLICATION

(11) **EP 0 930 491 A2**
(43) Date of publication of application: **21.07.1999**
(21) Application number: 98124675.4
(22) Date of filing: 24.12.1998
(51) Int. Cl.: G01L 5/10

(54) **Sensor of traction forces of longitudinal bodies**

(30) Priority: 14.01.1998 CZ 11298
(71) Applicant: Vùts, Liberec, 461 19 Liberec (CZ)
(72) Inventor: Sidlof, Pavel, 460 14 Liberec (CZ); Skop, Petr, 460 06 Liberec (CZ)
(74) Representative: Bergmeier, Werner, Dipl.-Ing.

(57) **Abstract**

The invention relates to a sensor of traction forces of longitudinal bodies comprising a base into which there is fixed one end of a measuring deformational member (4) fitted on its surface close to said fixing area with tensometers (6), the measuring deformational member (4) being equipped at its opposite free end with a guide (2) of the longitudinal body to be measured. The measuring deformational member (4) has a tetragonal cross section with bevelled longitudinal edges (400) and the measuring deformational member (4) is in its longitudinal axis from its free end as far as behind the level of the tensometers (7) fitted with a cavity (40).

## Description

### Technical Field

The invention relates to a sensor of traction forces of longitudinal bodies. The sensor comprises a base into which there is fixed one end of a measuring deformational member fitted on its surface close to said fixing area with tensometers. At its opposite free end, the measuring deformational member is equipped with a guide of the longitudinal body to be measured.

### Background Art

Most sensors of traction forces of longitudinal bodies such as threads etc. presently in use consist of a pair of end guides and of one middle guide of the longitudinal body. The longitudinal body whose traction force is to be measured is put on the guides of longitudinal body alternately so that the resultant of the traction forces acts on the middle guide made as a termination of the measuring deformational member. Its deflection is then converted by one of several methods to an electric signal.

The traction forces in a longitudinal body are relatively very small so that high response of the measuring deformational member is required.

If the sensor is intended to measure quick changes of not more than a few milliseconds or even tenths of milliseconds its measuring deformational member must have high dynamic parameters. The fulfilment of these two requirements is important in particular in sensors used for the measurement and analysis of traction forces while in sensors used for current measurements a high response is primordial. Other relevant parameters are good linearity, low hysteresis, low friction of the guides of longitudinal bodies, and also favourable cost of acquisition.

The sensors intended for current measuring use deformational members made as cantilevers consisting of flat thin strips, either with one cantilever consisting of flat thin strips or with two cantilevers consisting of flat thin strips situated one over the other. The conversion of the deformation of such measuring deformational member to an electric signal is carried out both by capacity sensors situated at the site of the maximum beam deflection and by tensometric converters fixed close to said fixing area of the sensor where the deformation of the measuring deformational member is greatest. The conversion of the deflection of such measuring deformational member to an electric signal is carried out also by optical systems. As a rule, in this case two parallel flat thin strips spaced a few millimetres apart are used. The flat thin strip ends are fixed at one end into a base, for instance into a handle body, and at the opposite end, into a small body fitted with the middle guide of longitudinal body. One section of the optical measuring system of the position is coupled with said small body, the other section of the optical measuring system of the position is stationary. The small body with the guide of the longitudinal body situated at the end of the flat thin strips deflects in relation to the force, and the deflection is converted to an electric signal by the optical measuring system.

The chief drawback of sensors equipped with a flat thin strip measuring deformational member consists in their poor rigidity resulting in low natural frequency of the measuring deformational member. Each of said variants is therefore suitable for measuring stabilized traction forces or at most for traction forces subject to small fluctuations only. On the contrary, a sudden change in the traction force brings about oscillations of the measuring deformational member and, consequently, of the output signal. The real signal of the traction force of the longitudinal body is then difficult to evaluate, and the connected measuring instrument tends to give erroneous data. Another drawback of such sensors consists in the fact that the relatively great loading force of the longitudinal body to be measured causes a relatively great deflection of the end of the measuring deformational member. A great change in the position of the middle guide of the longitudinal body in relation to the end guides of the longitudinal body involves a corresponding change in the geometry of traction forces of the measured longitudinal body and by means of this, a change in the magnitude of the resultant of such forces. Then, the output signal of such sensors fails to increase in exactly linear proportion to the increase in the traction force of the longitudinal body.

For dynamic measurements, the measuring deformational member is made as a rule as a solid-profile cantilever fixed in the basic body. The free end of the measuring deformational member is adapted to receive the guide of the longitudinal body. Close to the fixing area of the measuring deformational member, where the deformations are greatest, tensometers are installed. Such sensors are made of a special material ensuring high dimension stability, linearity and low hysteresis of the deformation of the measuring deformational member.

While achieving high rigidity of the measuring deformational member and, consequently, the required high natural frequency of the measuring deformational member, they are marked by poor response, i.e., by a low output signal whose subsequent amplification not always produces a signal high-grade enough for the measurement evaluation.

The invention intends to propose a sensor of traction forces of longitudinal bodies combining sufficient rigidity of the measuring deformational member with high response of the sensor.

### Disclosure of Invention

The goal of the invention is achieved by a sensor of traction forces of longitudinal bodies whose principle consists in that the measuring deformational member has a tetragonal cross section with bevelled longitudinal edges of the measuring deformational member and in that the measuring deformational member is in its longitudinal axis from its free end as far as behind the position of the tensometers fitted with a cavity.

Preferably, the degree of bevelling of the longitudinal edges of the measuring deformational member increases in the direction from its fixing area in the base toward its free end.

The cavity in the measuring deformational member, reaching at least behind the site where the tensometres are situated, in combination with the bevelling of its longitudinal edges increasing in the direction from its fixing area in the base toward its free end reduces the moment of inertia and the mass of the measuring deformational member and thus increases the response of the sensor while at the same time maintaining a sufficient rigidity of the measuring deformational member because the mass reduction of the measuring deformational member, especially in the area of the guide of the longitudinal body, has a favourable influence, in particular on the dynamic parameters of the sensor.

Preferably, the guide of the longitudinal body is made as a tube fixed by a part of its length in the outlet section of the cavity of the measuring deformational member.

The advantage of this arrangement consists in that the tensometers are fixed to flat planes on the surface of the measuring deformational member which permits their exact and reproducible positioning. In addition to this, exact and reproducible maintaining of the symmetric arrangement of the tensometers permits to compensate the torque generated by the friction of the longitudinal body against the guide of the longitudinal body.

### Description of Drawings

An example of embodiment of the sensor of traction forces of longitudinal bodies is schematically shown in the drawing in which Fig.1 is a general view of the sensor, Fig. 2 is the plan view of the sensor, Fig. 3 is a lateral view of the sensor, and Fig. 4 is a lateral and a front view of the mutual arrangement of the three guides of the longitudinal body of the measuring deformational member in the measuring head.

### Examples of Embodiment

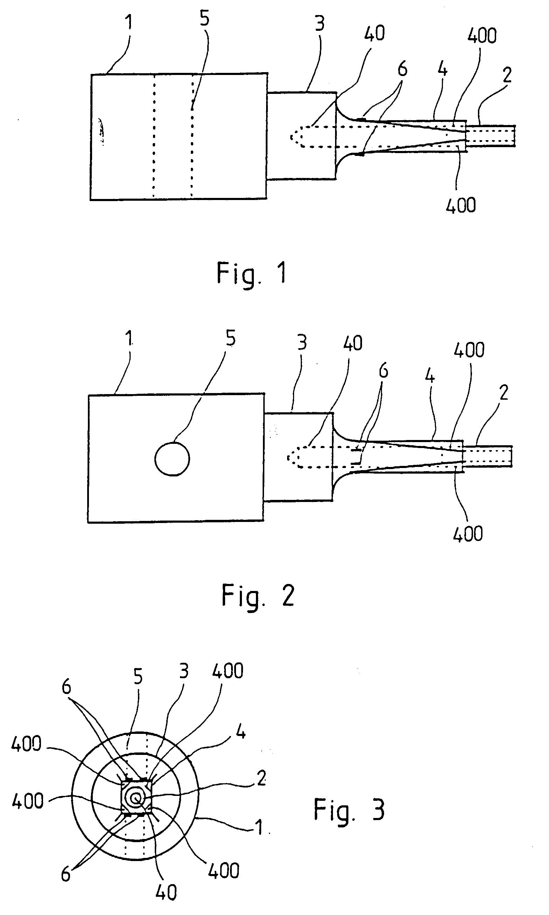

The sensor of traction forces of longitudinal bodies has two main parts, and more exactly, a base and a measuring deformational member **4**. The base is made as an assembly section **1** fitted with a fixing orifice **5** and featuring an installation section **3** steplessly passing into the measuring deformational member **4**. The measuring deformational member **4** has a tetragonal cross section. In the example of embodiment shown in the drawing, it is a square cross section; in another, not illustrated example of embodiment, the cross section of the measuring deformational member is a rectangular one. Close to its fixing area in the installation section, the measuring deformational member 4 is fitted with a set of tensometers **6**. In its longitudinal axis, the measuring deformational member **4** features a cavity **40** reaching from its free end as far as behind the position of the tensometers **6**. In the example of embodiment shown in Fig. 1, said cavity reaches as far as into the installation section **3.** At its free end, the measuring deformational member **4** is equipped with a guide **2** of a longitudinal body. In the example of embodiment shown in the drawing, the guide **2** of the longitudinal body is in the interest of additional reduction of the total mass of the measuring deformational member **4** made as a thin-walled tube made of an abrasion resistive material such as sapphire which by itself is marked by low density. By a part of its length, the thin-walled tube is fixed in the outlet part of the cavity **40** of the measuring deformational member **4**. For measuring the traction force of longitudinal bodies of relatively high rigidity such as copper or steel wires, the guide **2** of the longitudinal body is made as a not illustrated bearing with a roller fitted on its circumference with a groove. The bearing is equipped on its circumference with a groove and in its axis of rotation with a pin for fixing the measuring deformational member **4** in the outlet part of the cavity **40** of the measuring deformational member **4**.

Longitudinal edges **400** of the measuring deformational member **4** are bevelled, and the bevel angle increases in the direction from the fixing area in the installation section **3** toward the free end of the measuring deformational member **4,** as shown in the drawing. In the example of embodiment shown in the drawing the bevelling is a plane one. In another, not illustrated example of embodiment, the longitudinal edges **400** of the measuring deformational member **4** are bevelled by rounding. In still another not illustrated example of embodiment, the longitudinal edges **400** of the measuring deformational member **4** are bevelled to any chosen shape. The bevelling further reduces the mass of the measuring deformational member **4**.

The installation section **3** carries all means required for mutual wiring of the tensometers **6** into a measuring bridge. In the measuring deformational members **4** semiconductor tensometers are used whose conversion of the deformation to the electric resistance is much superior to that of the classical metal tensometers. As a rule, the surface of the installation section **3** carries not represented terminal strips glued thereto and to which are connected by soldering the outputs of the tensometers **6**, balancing and compensating resistors, and interconnecting wiring. The power supply to the tensometric bridge thus created and the signal transmission to a point outside the sensor body proper is provided by a not illustrated wire led through a not illustrated longitudinal orifice made in the assembly section **1**.

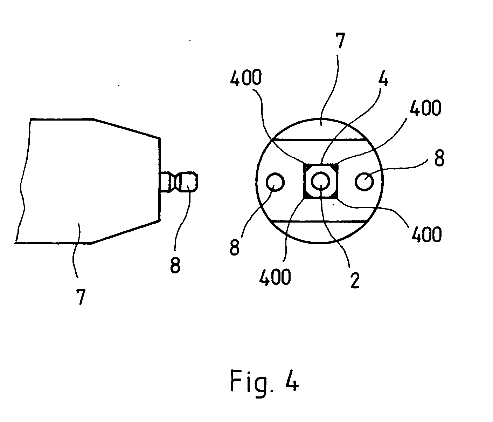

As is shown in Fig. 4, the sensor of traction forces with the guide **2** of the longitudinal body is usually built into a measuring head **7** with two end guides of the longitudinal body. The longitudinal body to be measured is engaged on the guides alternetaly. The end guides **8** of the longitudinal body are on their circumferences fitted each with a groove for guiding the longitudinal body thus ensuring during the measurement process a constant position of the longitudinal body on the guide **2** of the longitudinal body situated in the measuring deformational member **4**. In some cases, the guide **2** of the longitudinal body is for the improved guiding of said longitudinal body fitted with a not illustrated groove either on the whole of its circumference or at least on a part of it. In cases of a particularly difficult measurement when the longitudinal body to be measured risks to get out even out of the groove, the free end of the measuring deformational member **4** is fitted with a not illustrated closed ring through which the longitudinal body to be measured is led.

### Industrial applicability

The sensors of traction forces of longitudinal bodies find application in particular in the measuring of traction forces of threads, fibres, strips, wires and of similar longitudinal bodies.

## Claims

1. A sensor of traction forces of longitudinal bodies comprising a base into which there is fixed one end of a measuring deformational member (4) fitted on its surface close to said fixing area with tensometers (6), the measuring deformational member (4) being equipped at its opposite free end with a guide of the longitudinal body (2) to be measured, characterized by that the measuring deformational member (4) has a tetragonal cross section with bevelled longitudinal edges (400) and that the measuring deformational member (4) is in its longitudinal axis from its free end as far as behind the level of the tensometers (6) fitted with a cavity (40).

2. A sensor of traction forces of longitudinal bodies as claimed in Claim 1, characterized by that the angle of bevelling of the longitudinal edges (400) of the measuring deformational member (4) increases in the direction from its fixing area in the base toward its free end.

3. A sensor of traction forces of longitudinal bodies as claimed in Claims 1 and 2, characterized by that the guide (2) of the longitudinal body is made as a tube fixed by a part of its length in the outlet section of the cavity (40) of the measuring deformational member (4).
